# EUROPEAN PATENT APPLICATION

(11) **EP 3 628 452 A1**
(43) Date of publication of application: **01.04.2020**
(21) Application number: 18196600.3
(22) Date of filing: 25.09.2018
(51) Int. Cl.: B25J 9/16, G05B 19/12

(54) **SYSTEM AND METHOD FOR CONTROLLING A ROBOTIC DEVICE**

(71) Applicant: NXP B.V., 5656 AG Eindhoven (NL)
(72) Inventor: Vermunt, Franciscus Maria, 5656 AG Eindhoven (NL)
(74) Representative: Krott, Michel

(57) **Abstract**

In accordance with a first aspect of the present disclosure, a system for controlling a robotic device is provided, the robotic device being configured to perform at least one operation on an external object, the system comprising: a radio frequency communication device comprised in or attached to the external object; a radio frequency communication reader comprised in or attached to the robotic device; wherein the radio frequency communication device comprises control data for controlling the at least one operation; wherein the radio frequency communication reader is configured to read said control data from the radio frequency communication device; wherein the robotic device is configured to perform the at least one operation using said control data. In accordance with a second aspect of the present disclosure, a corresponding method for controlling a robotic device is conceived. In accordance with a third aspect of the present disclosure, a corresponding computer program is provided.

## Description

### TECHNICAL FIELD

The present disclosure relates to a system for controlling a robotic device. Furthermore, the present disclosure relates to a corresponding method for controlling a robotic device, and to a corresponding computer program.

### BACKGROUND

Robotic devices may be used for various purposes. For instance, robotic window cleaners may be used to automatically clean windows, robotic painting machines may be used to automatically paint surfaces, robotic lawnmowers may be used to automatically mow lawns, and robotic vacuum cleaners may be used to automatically clean surfaces. It is often difficult to control the operation of such robotic devices, in the sense that their operation cannot be changed without a cumbersome reprogramming effort. For example, a robotic device like an outdoor window cleaner requires precise position data and properties to perform its task. The device can be programmed upfront with all properties and it can use differential-GPS for determining the location, but this is not very precise and does not allow properties to be set from indoors without requiring a reprogramming of the device. Thus, it may be desirable to facilitate controlling robotic devices of the kind set forth.

### SUMMARY

In accordance with a first aspect of the present disclosure, a system for controlling a robotic device is provided, the robotic device being configured to perform at least one operation on an external object, the system comprising: a radio frequency communication device comprised in or attached to the external object; a radio frequency communication reader comprised in or attached to the robotic device; wherein the radio frequency communication device comprises control data for controlling the at least one operation; wherein the radio frequency communication reader is configured to read said control data from the radio frequency communication device; wherein the robotic device is configured to perform the at least one operation using said control data.

In an embodiment, the radio frequency communication device is a near field communication tag and the radio frequency communication reader is a near field communication reader.

In an embodiment, the control data include data indicative of a location of the external object.

In an embodiment, the control data include data indicative of one or more physical properties of the external object.
In an embodiment, the control data include programmable instructions for performing the at least one operation.

In an embodiment, the control data include timing data indicative of a start time and/or an end time of the at least one operation.

In an embodiment, the radio frequency communication device comprises a non-volatile memory for storing the control data.

In an embodiment, said non-volatile memory comprises protected locations for storing fixed portions of said control data.

In an embodiment, the protected locations of the non-volatile memory are write-once locations.

In an embodiment, the system further comprises a programming device configured to write the control data into the radio frequency communication device. In an embodiment, the radio frequency communication reader is further configured to write additional data into the radio frequency communication device, in particular data indicative of a completion of the at least one operation.

In an embodiment, the robotic device is a robotic window cleaner and the external object is a window; or the robotic device is a robotic painting machine and the external object is a paintable surface; or the robotic device is a robotic lawnmower and the external object is a lawn; or the robotic device is a robotic vacuum cleaner and the external object is a cleanable surface.

In accordance with a second aspect of the present disclosure, a method for controlling a robotic device is conceived, the method comprising: the robotic device performs at least one operation on an external object; a radio frequency communication reader, which is comprised in or attached to the robotic device, reads out control data from a radio frequency communication device, the radio frequency communication device being comprised in or attached to the external object; the robotic device performs the at least one operation using said control data.

In accordance with a third aspect of the present disclosure, a computer program is provided, comprising executable instructions which, when executed, carry out or control a method of the kind set forth.

In an embodiment, a non-transitory computer-readable medium comprises a computer program of the kind set forth.

### DESCRIPTION OF DRAWINGS

Embodiments will be described in more detail with reference to the appended drawings, in which:
Fig. 1 shows an illustrative embodiment of a system for controlling a robotic device;
Fig. 2 shows an illustrative embodiment of a method for controlling a robotic device;
Fig. 3 shows another illustrative embodiment of a system for controlling a robotic device.

### DESCRIPTION OF EMBODIMENTS

Robotic devices may be used for various purposes. For instance, robotic window cleaners may be used to automatically clean windows, robotic painting machines may be used to automatically paint surfaces, robotic lawnmowers may be used to automatically mow lawns, and robotic vacuum cleaners may be used to automatically clean surfaces. As mentioned above, it may be desirable to facilitate controlling robotic devices of the kind set forth.

Therefore, in accordance with a first aspect of the present disclosure, a system for controlling a robotic device is provided, the robotic device being configured to perform at least one operation on an external object, the system comprising: a radio frequency communication device comprised in or attached to the external object; an radio frequency communication reader comprised in or attached to the robotic device; wherein the radio frequency communication device comprises control data for controlling the at least one operation; wherein the radio frequency communication reader is configured to read said control data from the radio frequency communication device; wherein the robotic device is configured to perform the at least one operation using said control data. In this way, the operation of the robotic device can be easily controlled.

It is noted that the term "robotic device" should be interpreted broadly, i.e. it may include any type of device that is able to perform a task autonomously. Such a device does not need to be a complex device, for instance. Furthermore, it is noted that performing at least one operation on an external object should also be interpreted broadly, i.e. it may include performing an operation around or near the external object and not directly on the object. For instance, if the external object is a window, the operation might not be performed directly on the window, but - instead or in addition - around or near the window.

In an embodiment, the radio frequency communication device is a near field communication (NFC) tag and the radio frequency communication reader is a near field communication (NFC) reader. Near field communication refers to a set of short-range wireless technologies, typically requiring a separation of 10 cm or less. NFC operates at 13.56 MHz on an ISO/IEC 18000-3 air interface and at data rates ranging from 106 kbit/s to 424 kbit/s. NFC involves an initiator and a target; the initiator actively generates a field that can power a passive target. This enables NFC targets to take very simple form factors such as unpowered tags, stickers, key fobs, or cards. As used herein, the NFC reader is an example of an initiator of the kind set forth, and the NFC tag is an example of a target of the kind set forth. Since NFC enables only a short communication distance, the risk that control data are inadvertently retrieved from a wrong radio frequency communication device is small. For instance, the risk that the reader retrieves control data from the NFC tag of a neighboring object is small. However, it is noted that the radio frequency communication device and the corresponding reader may also be based on another technology. For instance, the device may be based on the broader class of radio frequency identification (RFID) technology or another class of short-range to mid-range communication technology. Thus, the skilled person will understand that the below-described NFC tag and NFC reader are only examples of a radio frequency communication device, respectively a radio frequency communication reader of the kind set forth.

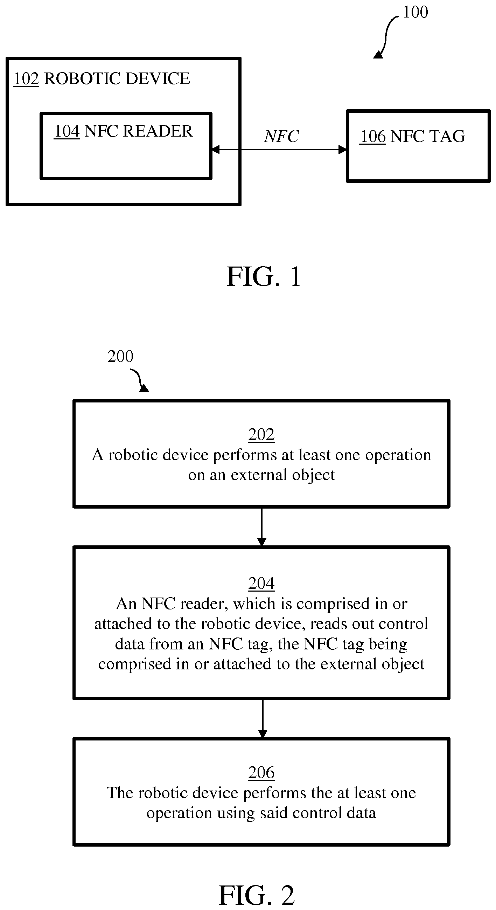

**Fig. 1** shows an illustrative embodiment of a system 100 for controlling a robotic device. The system 100 comprises a robotic device 102, which in turn includes an NFC reader 104. Furthermore, the system 100 comprises an NFC tag 106. The NFC tag 106 is comprised in or attached to an external object (not shown), i.e. an object which is external to the robotic device. The NFC reader 104 is configured to read control data from the NFC tag. Furthermore, the robotic device 102 is configured to perform at least one operation using said control data. For this purpose, the robotic device 102 may comprise a controller (not shown), which is operatively coupled to the NFC reader 104, and which is configured to control e.g. mechanical movements of the robotic device using the control data received from the NFC tag 106 through the NFC reader 104. The robotic device 102 may for example be a robotic window cleaner, a robotic painting machine, a robotic lawnmower, or a robotic vacuum cleaner. In those cases, the NFC tag 106 may be comprised on or attached to the objects on which the respective robotic devices operate. For instance, the NFC tag 106 may be embedded in a window or be attached on the exterior of the window, or the NFC tag 106 may be attached to a paintable surface, to a fence surrounding a lawn, or a cleanable surface, as the case may be. The robotic device 102 does not need expensive position determination equipment, such as a cable connected to a control device on a roof if the robotic device 102 is a robotic window cleaner.

Thus, in accordance with the present disclosure, robotic devices (e.g., automated window cleaners) may be equipped with NFC readers, and the objects on which these robotic devices operate may be equipped with NFC tags. In this way, specific requirements that apply to those objects can easily be made available to the robotic devices. For example, in case of a cleaning robot that cleans windows on the exterior of a building, the NFC tags can be programmed from the interior with information like "do not clean today", "very dirty", "no cleaning between 1 and 2", et cetera, by means of a relatively simple programming device.

In an embodiment, the control data include data indicative of a location of the external object. For instance, if the object is a window, then the control data may include data indicative of the position of the window in a building. More specifically, instead of the robot having an exact map of the building with all windows exactly positioned in addition to its positioning system, it can move freely around, only sense the edges of the building and when finding a tag, it can retrieve control data from that tag. These control data contain information about the cleanable area (e.g., the dimensions of the cleanable area). In this way, as mentioned above, expensive position determination equipment is not needed. Furthermore, a cable connected to a control device on a roof (i.e. if the robotic device is not battery- or solar-powered) is not needed. Furthermore, in an embodiment, the control data may include data indicative of one or more physical properties of the external object. For instance, if the object is a wall and the robotic device is a painting machine, then the control data may include data indicative of the type of surface of the wall, e.g. a coarse or soft surface, so that the painting machine can adjust its operation accordingly. Thus, in this way, the operational flexibility of the robotic device can be increased.

In an embodiment, the control data include programmable instructions for performing the at least one operation. For instance, the NFC tags may be programmed with specific instructions, such as "do not clean today" and "do not clean between 1 and 2 pm". Accordingly, the operational flexibility of the robotic device can be further increased. Furthermore, in an embodiment, the control data include timing data, i.e. data indicative of a start time and/or end time of the at least one operation. In this way, the operational flexibility of the robotic device can still be further increased. In an embodiment, the system further comprises a programming device configured to write the control data into the radio frequency communication device. The programming device may be a dedicated, handheld device, for example, or a commonly used mobile device (e.g., a smartphone) which is configured to write the control data into the radio frequency communication device. In particular, if the radio frequency communication device is an NFC tag, an NFC-enabled mobile device can be conveniently used as a programming device.

In a practical and effective implementation, the NFC tag comprises a non-volatile memory for storing the control data. Furthermore, in an embodiment, the non-volatile memory comprises protected locations for storing fixed portions of the control data. In this way, it can be avoided that important information, such as the type of object (e.g. window or door) and the type of material (e.g. glass, wood, plastic or stone) can be changed inadvertently by a user, or by cleaning personnel or maintenance personnel, for example. In a practical and effective implementation, the protected locations of the non-volatile memory are write-once locations.

**Fig. 2** shows an illustrative embodiment of a method 200 for controlling a robotic device. The method 200 comprises the following steps. At 202, a robotic device performs at least one operation on an external object. At 204, an NFC reader, which is comprised in or attached to the robotic device, reads out control data from an NFC tag, the NFC tag being comprised in or attached to the external object. Furthermore, at 206, the robotic device performs the at least one operation using said control data.

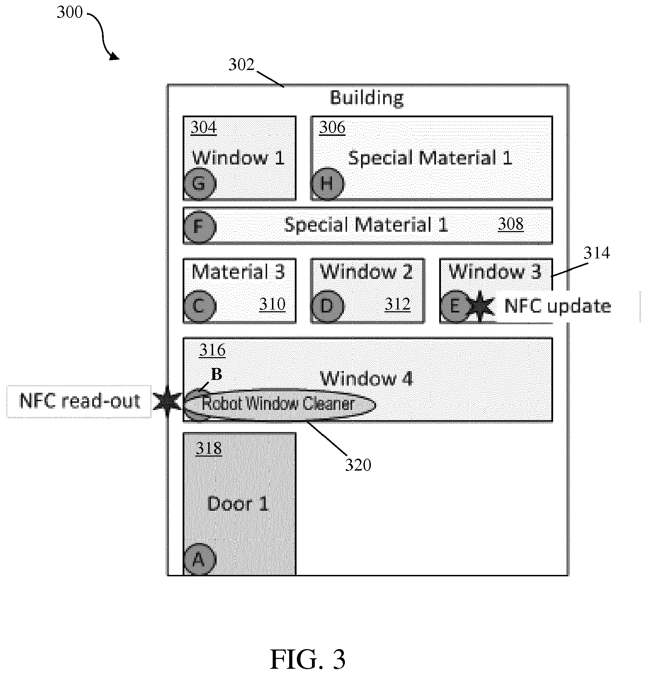

**Fig. 3** shows another illustrative embodiment of a system 300 for controlling a robotic device. The system comprises a building 302, which includes a plurality of windows 304, 312, 314, 316, a plurality of special materials 306, 308, 310, and a door 318. The skilled person will understand that other buildings may include different objects and/or different quantities or configurations of objects. For instance, in an apartment complex more doors may be present, e.g. for garage or storeroom access. Each object (i.e. window, special material and door) is equipped with an NFC tag A, B, C, D, E, F, G, H. The system 300 further comprises a robotic window cleaner 320, which includes an NFC reader (not shown). In operation, the robotic window cleaner reads out control data from the NFC tags through its NFC reader. For instance, in the example shown, the robotic window cleaner 320 reads out control data from the NFC tag B attached to a window 316. The control data may contain location data, such as the dimensions of the window 316 that should be cleaned, and specific instructions such as "very dirty, clean intensively". Subsequently the robotic window cleaner 320 performs the cleaning operation using these control data. It is noted that the robotic window cleaner may position itself using the NFC tags A, B, C, D, E, F, G, H, as orientation points. Furthermore, a user may update the control data of the NFC tags to provide specific cleaning instructions to the robotic window cleaner 320. Using NFC, this can conveniently be done from within the building, i.e. without physically accessing the robotic window cleaner 320 outside the building. In addition, it is noted that - although the NFC tags A, B, C, D, E, F, G, H, are placed in the bottom-left corner of the various objects shown in Fig. 3 - they can also be placed at other locations, e.g. in the bottom-right corner, top-left corner, et cetera.

The presently disclosed system and method facilitate linking a service provider (e.g., a window cleaning company) with an object the service applies to and the user of the object in an interactive way, with specific control on both sides, i.e. by the service provider and the user. It is noted that for an apartment or office building there may be two or more types of users, e.g. the owner and a person occupying a specific tenement or room. More specifically, the service provider may be linked to the object and the object to the user, so implicitly the user may be linked to the service provider. For instance, the service provider may program the NFC tag with specific data indicative of the type and location of the object (e.g. a window having dimensions x and y), while the user may program the tag with specific instructions, such as "do not clean today". This is achieved without using complex technologies like the global positioning system (GPS) or a slow interaction like paper forms for the user to communicate specific details ("baby sleeps from 1 to 2 pm") to the service provider (window cleaner) about a specific object (window). Furthermore, it is a "no battery" solution, i.e. only the accessing device needs to be powered (i.e. the NFC reader), not the NFC tags. It is noted that the term "reader" should be interpreted broadly, in the sense that it may also include a writing function. For instance, in the field of NFC it is common to refer to a reader/writer device as an "NFC reader" in short. The writing function may in this case be used, among others, to enable the robot device to write additional data into the tag, for example data indicative of a completion of the operation ("cleaned at XX:XX"). This may be useful to prevent that another robotic device performs the operation again, for instance.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

100 system for controlling a robotic device
102 robotic device
104 near field communication reader
106 near field communication tag
200 method for controlling a robotic device
202 a robotic device performs at least one operation on an external object
204 a near field communication reader, which is comprised in or attached to the robotic device, reads out control data from a near field communication tag, the near field communication tag being comprised in or attached to the external object
206 the robotic device performs the at least one operation using said control data
300 system for controlling a robotic device
302 building
304 window
306 material
308 material
310 material
312 window
314 window
316 window
318 door
320 robotic window cleaner
A near field communication tag
B near field communication tag
C near field communication tag
D near field communication tag
E near field communication tag
F near field communication tag
G near field communication tag
H near field communication tag

## Claims

1. A system for controlling a robotic device, the robotic device being configured to perform at least one operation on an external object, the system comprising:
- a radio frequency communication device comprised in or attached to the external object;
- a radio frequency communication reader comprised in or attached to the robotic device;
wherein the radio frequency communication device comprises control data for controlling the at least one operation;
wherein the radio frequency communication reader is configured to read said control data from the radio frequency communication device;
wherein the robotic device is configured to perform the at least one operation using said control data.

2. The system of claim 1, wherein the radio frequency communication device is a near field communication tag and the radio frequency communication reader is a near field communication reader.

3. The system of claim 1 or 2, wherein the control data include data indicative of a location of the external object.

4. The system of any preceding claim, wherein the control data include data indicative of one or more physical properties of the external object.

5. The system of any preceding claim, wherein the control data include programmable instructions for performing the at least one operation.

6. The system of any preceding claim, wherein the control data include timing data indicative of a start time and/or an end time of the at least one operation.

7. The system of any preceding claim, wherein the radio frequency communication device comprises a non-volatile memory for storing the control data.

8. The system of claim 7, wherein said non-volatile memory comprises protected locations for storing fixed portions of said control data.

9. The system of claim 8, wherein the protected locations of the non-volatile memory are write-once locations.

10. The system of any preceding claim, further comprising a programming device configured to write the control data into the radio frequency communication device.

11. The system of any preceding claim, wherein the radio frequency communication reader is further configured to write additional data into the radio frequency communication device, in particular data indicative of a completion of the at least one operation.

12. The system of any preceding claim, wherein:
- the robotic device is a robotic window cleaner and the external object is a window; or
- the robotic device is a robotic painting machine and the external object is a paintable surface; or
- the robotic device is a robotic lawnmower and the external object is a lawn; or the robotic device is a robotic vacuum cleaner and the external object is a cleanable surface.

13. A method for controlling a robotic device, the method comprising:
- the robotic device performs at least one operation on an external object;
- a radio frequency communication reader, which is comprised in or attached to the robotic device, reads out control data from a radio frequency communication device, the radio frequency communication device being comprised in or attached to the external object;
- the robotic device performs the at least one operation using said control data.

14. A computer program comprising executable instructions which, when executed, carry out or control the method of claim 13.

15. A non-transitory computer-readable medium comprising the computer program of claim 14.

## Amended claims

### Amended claims in accordance with Rule 137(2) EPC.

1. A system (100) for controlling a robotic device (102), the robotic device (102) being configured to perform at least one operation on an external object, the system comprising:
- a radio frequency communication device (106);
- a radio frequency communication reader (104) comprised in or attached to the robotic device (102);
wherein the radio frequency communication device (106) comprises control data for controlling the at least one operation;
wherein the radio frequency communication reader (104) is configured to read said control data from the radio frequency communication device (106);
wherein the robotic device (102) is configured to perform the at least one operation using said control data;
**characterized in that** the radio frequency communication device (106) is a near field communication tag comprised in or attached to the external object and the radio frequency communication reader (104) is a near field communication reader.

2. The system (100) of claim 1, wherein the control data include data indicative of a location of the external object.

3. The system (100) of any preceding claim, wherein the control data include data indicative of one or more physical properties of the external object.

4. The system (100) of any preceding claim, wherein the control data include programmable instructions for performing the at least one operation.

5. The system (100) of any preceding claim, wherein the control data include timing data indicative of a start time and/or an end time of the at least one operation.

6. The system (100) of any preceding claim, wherein the radio frequency communication device (106) comprises a non-volatile memory for storing the control data.

7. The system (100) of claim 6, wherein said non-volatile memory comprises protected locations for storing fixed portions of said control data.

8. The system (100) of claim 7, wherein the protected locations of the non-volatile memory are write-once locations.

9. The system (100) of any preceding claim, further comprising a programming device configured to write the control data into the radio frequency communication device (106).

10. The system (100) of any preceding claim, wherein the radio frequency communication reader (104) is further configured to write additional data into the radio frequency communication device (106), in particular data indicative of a completion of the at least one operation.

11. The system (100) of any preceding claim, wherein:
- the robotic device (102) is a robotic window cleaner and the external object is a window; or
- the robotic device (102) is a robotic painting machine and the external object is a paintable surface; or
- the robotic device (102) is a robotic lawnmower and the external object is a lawn; or
- the robotic device (102) is a robotic vacuum cleaner and the external object is a cleanable surface.

12. A method (200) for controlling a robotic device (102), the method comprising:
- the robotic device (102) performs (202) at least one operation on an external object;
- a radio frequency communication reader (104), which is comprised in or attached to the robotic device, reads out (204) control data from a radio frequency communication device (106);
- the robotic device (102) performs (206) the at least one operation using said control data;
**characterized in that** the radio frequency communication device (106) is a near field communication tag comprised in or attached to the external object and the radio frequency communication reader (104) is a near field communication reader.

13. A computer program comprising executable instructions which, when executed, carry out or control the method (200) of claim 12.

14. A non-transitory computer-readable medium comprising the computer program of claim 13.
